# EUROPÄISCHE PATENTSCHRIFT

(11) **EP 3 221 256 B1**
(45) Veröffentlichungstag und Bekanntmachung des Hinweises auf die Patenterteilung: **09.09.2020**
(21) Anmeldenummer: 15801345.8
(22) Anmeldetag: 09.11.2015
(51) Int. Cl.: C01B 3/00, C01B 3/26, C25B 1/04

(54) **BELADE-/ENTLADE-EINHEIT FÜR WASSERSTOFF, ANLAGE MIT EINER DERARTIGEN BELADE-/ENTLADE-EINHEIT UND VERFAHREN ZUM SPEICHERN UND FREISETZEN VON ENERGIE**
LOADING/UNLOADING UNIT FOR HYDROGEN, INSTALLATION COMPRISING SAID LOADING/UNLOADING UNIT AND METHOD FOR STORING AND RELEASING ENERGY
UNITÉ DE CHARGE/DÉCHARGE POUR DE L'HYDROGÈNE, SYSTÈME POURVU D'UNE TELLE UNITÉ DE CHARGE/DÉCHARGE ET PROCÉDÉ POUR ACCUMULER ET LIBÉRER DE L'ÉNERGIE

(30) Priorität: 17.11.2014 DE 102014223426
(43) Veröffentlichungstag der Anmeldung: 27.09.2017
(73) Patentinhaber: HYDROGENIOUS LOHC TECHNOLOGIES GMBH, 91058 Erlangen (DE)
(72) Erfinder: PREUSTER, Patrick, 91180 Heideck (DE); BÖSMANN, Andreas, 91093 Hessdorf (DE); WASSERSCHEID, Peter, 91054 Erlangen (DE)
(74) Vertreter: Rau, Schneck & Hübner Patentanwälte Rechtsanwälte PartGmbB
(86) Internationale Anmeldenummer: PCT/EP2015/076031
(87) Internationale Veröffentlichungsnummer: WO 2016/078949

(56) Entgegenhaltungen:
- WO-A1-2015/110334
- WO-A1-2015/189417
- DE-A1-102011 111 565
- DE-A1-102011 116 694
- US-A1- 2007 227 899
- TAUBE M ET AL: "A system of hydrogen-powered vehicles with liquid organic hydrides", INTERNATIONAL JOURNAL OF HYDROGEN ENERGY, ELSEVIER SCIENCE PUBLISHERS B.V., BARKING, GB, Bd. 8, Nr. 3, 1. Januar 1983 (1983-01-01), Seiten 213-225, XP025639517, ISSN: 0360-3199, DOI: 10.1016/0360-3199(83)90067-8 [gefunden am 1983-01-01]

## Beschreibung

Die vorliegende Patentanmeldung nimmt die Priorität der deutschen Patentanmeldung DE 10 2014 223 426.3 in Anspruch.

Die Erfindung betrifft eine Belade-/Entlade-Einheit für Wasserstoff, eine Anlage mit einer derartigen Belade-/Entlade-Einheit sowie ein Verfahren zum Speichern und Freisetzen von Energie.

Ein Trägermedium zum chemischen Binden von Wasserstoff ist aus der EP 1 475 349 A2 bekannt. Ein Liquid Organic Hydrogen Carrier (LOHC) kann mit Wasserstoff beladen, also hydriert werden. Das Beladen des Trägermediums mit Wasserstoff erfolgt in einer Belade-Einheit. In der hydrierten Form ist der Wasserstoff an dem Trägermedium chemisch gebunden. Das Trägermedium ist in einem beladenen Zustand. Zum Freisetzen des Wasserstoffs erfolgt ein Entladen des Wasserstoffs von dem beladenen Trägermedium in einer Entlade-Einheit. Anlagen, die jeweils eine Belade-Einheit und eine Entlade-Einheit, aufweisen, sind bekannt aus DE 10 2011 116 694 A1, US 2007/0227899 A1, DE 10 2011 111 565 A1 und Taube M. et al.: "A system of hydrogen-powered vehicles with liquid organic hydrides", international journal of hydrogen energy, Band 8, Nr. 3, 1983, Seiten 213 bis 225.

Die WO 2015/189 417 A1 offenbart eine Vorrichtung für die Vorbereitung von Metallhydriden.

Der vorliegenden Erfindung liegt die Aufgabe zugrunde, das Speichern und Freisetzen von Energie, insbesondere das Speichern und Freisetzen von Wasserstoff, zu vereinfachen.

Die Aufgabe wird durch die Merkmale der Ansprüche 1, 5 und 12 gelöst. Der Kern der Erfindung besteht darin, dass eine Belade-/Entlade-Einheit für Wasserstoff geschaffen wird, die sowohl das Beladen eines Trägermediums mit Wasserstoff als auch ein Entladen des Wasserstoffs vom beladenen Trägermedium ermöglicht. In der Belade-/Entlade-Einheit erfolgt das Beladen des Trägermediums und das Entladen des Trägermediums im zeitlichen Wechsel in ein und demselben Reaktionsbehälter. Insbesondere erfolgt das Beladen während eines ersten Zeitraums und das Entladen während eines zweiten Zeitraums, wobei der erste Zeitraum und der zweite Zeitraum nicht überlappen. Es ist insbesondere ausgeschlossen, dass das Beladen und das Entladen zu irgendeinem Zeitpunkt gleichzeitig erfolgen. Die Belade-/Entlade-Einheit weist einen Reaktionsbehälter auf. In ein und demselben Reaktionsbehälter findet das Beladen des Trägermediums, insbesondere LOHC, mit Wasserstoff und das Entladen des Wasserstoffs vom beladenen Trägermedium, insbesondere LOHC, statt. Insbesondere dient sowohl für das Beladen als auch für das Entladen ein und derselbe Katalysator. Daraus ergeben sich in überraschender Weise Vorteile in Bezug auf Betriebsfestigkeit, Dynamik und Investitionskosten. Eine Belade-/Entladestation-Einheit kann auch mehr als einen Reaktionsbehälter aufweisen. Wesentlich ist, dass jeder Reaktionsbehälter für sich geeignet ist, dass in ihm eine Entladung und eine Beladung stattfinden können. Der Reaktionsbehälter ist eine kombinierte Einheit, die die Funktionalitäten einer separaten Belade-Einheit und einer separaten Entlade-Einheit gemäß dem Stand der Technik in sich vereint. Es ist also nicht erforderlich, eine separate Belade-Einheit für das Beladen und eine separate Entlade-Einheit für das Entladen zur Verfügung zu stellen. Insbesondere weisen eine Belade-Einheit und eine Entlade-Einheit gemäß dem Stand der Technik unterschiedlich ausgeführte Reaktionsbehälter auf, um den jeweils unterschiedlichen Druck- und Temperaturbedingungen bei einer Beladung und einer Entladung zu entsprechen. Mit der kombinierten Belade-/Entlade-Einheit entfällt insbesondere die Notwendigkeit, für die separaten und unterschiedlich ausgeführten Reaktionsbehälter jeweils angepasste Katalysatoren bereitzustellen. Ferner kann eine gemeinsame Infrastruktur für die kombinierte Belade-/Entlade-Einheit bereitgestellt werden. Es ist insbesondere entbehrlich, für eine Belade-Einheit und für eine Entlade-Einheit jeweils eine separate Infrastruktur bereitzustellen, die typischerweise eine Steuerelektronik, Sicherheitseinrichtungen, Mess- und Regeltechnik und Pumpen umfasst. Durch die Verwendung mehrerer Reaktionsbehälter in der Belade-/Entlade-Einheit kann die Leistung des Systems, also insbesondere die Belade- und/oder Entlade-Rate, erhöht werden. Die erfindungsgemäße Belade-/Entlade-Einheit für Wasserstoff ermöglicht in dem Reaktionsbehälter insbesondere die LOHC-Beladung und die LOHC-Entladung. Gegenüber dem Stand der Technik ist es also möglich, die Anzahl der Einheiten zu reduzieren. Die Investitionskosten für die erfindungsgemäße Belade-/Entlade-Einheit sind gegenüber den Investitionskosten für eine Belade-Einheit und eine Entlade-Einheit gemäß dem Stand der Technik reduziert. Ein Einsparpotential, insbesondere reduzierte Investitionskosten, betragen insbesondere zwischen 25 und 50 % weniger als Investitionskosten für eine Anlage gemäß dem Stand der Technik. Insbesondere sind Anzahl und Investitionskosten für weitere Anlagenkomponenten und Nebenaggregaten, die mit der Belade-/Entlade-Einheit zu verbinden sind, reduziert. Der apparative Aufwand für mess-, regel- und sicherheitstechnische Apparaturen ist vereinfacht.

Die erfindungsgemäße Belade-/Entlade-Einheit für Wasserstoff ermöglicht in dem Reaktionsbehälter insbesondere die LOHC-Beladung durch eine katalytische Hydrierreaktion und insbesondere die LOHC-Entladung durch eine katalytische Dehydrierreaktion.

Eine Belade-/Entlade-Einheit mit einem, insbesondere im Reaktionsbehälter angeordneten, Belade-/Entlade-Katalysator zum Katalysieren des Beladens des Trägermediums mit Wasserstoff und zum Katalysieren des Entladens des Wasserstoffs vom beladenen Trägermedium, ermöglicht insbesondere, dass die beiden Prozessschritte in ein und demselben Reaktionsbehälter stattfinden können. Der Belade-/Entlade-Katalysator weist beispielsweise ein Belade-Katalysatormaterial und ein Entlade-Katalysatormaterial auf. Überraschend wurde gefunden, dass beispielsweise das Entlade-Katalysatormaterial während des Beladens des Trägermediums mit Wasserstoff nicht negativ beeinflusst wird. Entsprechend wird das Belade-Katalysatormaterial während des Entladens des Wasserstoffs vom beladenen Trägermedium nicht negativ beeinflusst. Ganz im Gegenteil wurde gefunden, dass das Entlade-Katalysatormaterial, das durch Entlade-vorgänge verkokt sein kann, während eines Beladevorgangs regeneriert werden kann. Deaktivierende Kohlenstoffablagerungen an dem Entlade-Katalysatormaterial, die sich insbesondere bei der LOHC-Entladung und insbesondere bei hohen Temperaturen und niedrigen Wasserstoffdrücken auf dem Entlade-Katalysatormaterial bilden, werden während der LOHC-Beladung bei hohen Wasserstoffdrücken und niedrigen Temperaturen von der Oberfläche des Entlade-Katalysatormaterials entfernt. Überraschend wurde gefunden, dass in der kombinierten Belade-/Entlade-Einheit ein Belade-/Entlade-Katalysator sowohl zum Beladen als auch zum Entladen eingesetzt werden kann. Insbesondere wurde gefunden, dass der Belade-/Entlade-Katalysator während der LOHC-Beladung regeneriert. Dadurch erhöht sich die Betriebsfestigkeit und die Lebensdauer des Belade-/Entlade-Katalysators deutlich. Der Belade-/Entlade-Katalysator ermöglicht in dem Reaktionsbehälter die Durchführung der Wasserstoffspeicherung in LOHC, nämlich die Hydrierung und die Dehydrierung des LOHC, im gleichen Reaktionsbehälter. Das Beladen und das Entladen finden zu unterschiedlichen Zeitpunkten, insbesondere während unterschiedlicher, insbesondere nicht überlappender, Zeiträume statt. Die Hydrierung findet während eines energiereichen Zeitraums statt, in dem ein Energieüberschuss vorliegt. Energieüberschuss bedeutet, dass Energie, insbesondere aus regenerativen Energiequellen, und/oder aus einem Stromleitungsnetz kostengünstig zur Verfügung steht. Das Entladen erfolgt während eines energiearmen Zeitraums, in dem Energiebedarf besteht. Während des energiearmen Zeitraums stehen insbesondere regenerative Energiequellen nicht oder in nicht ausreichendem Maße zur Verfügung. Ein energiearmer Zeitraum kann auch dadurch gekennzeichnet sein, dass elektrischer Strom aus einem elektrischen Stromleitungsnetz zu vergleichsweise hohen Kosten bezogen werden muss. Ein energiereicher Zeitraum und ein energiearmer Zeitraum überlappen zeitlich nicht. Das Beladen und Entladen findet in der kombinierten Belade-/Entlade-Einheit während verschiedener, zeitlich nicht überlappender, Zeiträume statt. Typischerweise beträgt die Prozesstemperatur während des Entladens zwischen 100 °C und 450 °C, insbesondere zwischen 150 °C und 420 °C und insbesondere zwischen 180 °C und 390 °C. Der Prozessdruck beim Entladen beträgt typischerweise zwischen 0,1 und 30 bar, insbesondere zwischen 1 und 10 bar. Für den Beladevorgang sind Temperaturen zwischen 50 °C und 400 °C, insbesondere zwischen 120 °C und 300 °C und insbesondere zwischen 150 °C und 280 °C vorteilhaft. Ein Prozessdruck beim Beladen liegt typischerweise zwischen 2 bar und 200 bar, insbesondere bei 10 bar bis 100 bar. Ein in der kombinierten Belade-/Entlade-Einheit verwendeter Belade-/Entlade-Katalysator liegt insbesondere als heterogener Katalysator, insbesondere in Form eines Pulvers, einer Schüttung von Formkörpern oder als strukturiertes Bauteil, vor. Der Belade-/Entlade-Katalysator weist mindestens ein katalytisch wirksames Element auf. Das mindestens eine katalytisch wirksame Element gehört insbesondere zu den Elementen der Nebengruppen, insbesondere der Nebengruppen 8 bis 11. Insbesondere werden als katalytisch wirksame Elemente Ruthenium, Nickel, Platin, Palladium oder Rhodium verwendet. Insbesondere hat sich als Belade-Katalysatormaterial Ruthenium und/oder Nickel erwiesen. Als Entlade-Katalysatormaterial eignen sich bevorzugt Platin oder Palladium. Durch die Verwendung von zwei unterschiedlichen Katalysatormaterialien zum Beladen einerseits und zum Entladen andererseits können die jeweiligen Prozessbedingungen gezielt ausgenutzt werden. Insbesondere wurde gefunden, dass die zwei verschiedenen Katalysatormaterialien sich nicht negativ beeinträchtigen. Ganz im Gegenteil können die Katalysatormaterialien sich wechselweise gegenseitig positiv beeinflussen. Der Belade-/Entlade-Katalysator weist als Katalysatormaterial insbesondere mindestens einen katalytisch aktiven Feststoff auf. Es ist auch möglich, dass eine Mischung aus mehreren katalytisch aktiven Feststoffen vorliegt. Eine Mischung aus mehreren katalytisch aktiven Feststoffen kann in einer Schichtung der unterschiedlich katalytisch aktiven Feststoffe im Reaktionsbehälter vorliegen. Das bedeutet, dass die unterschiedlichen Katalysatormaterialien in unterschiedlichen Schichten in unterschiedlichen Mengenverhältnissen vorliegen, wobei die unterschiedlichen Schichten in unterschiedlichen Mengenverhältnissen übereinander angeordnet sind. Eine derartige schichtweise Anordnung der katalytisch aktiven Feststoffe ermöglicht ein Glätten der Temperaturprofile, die sich im Reaktionsbehälter aufgrund einer Wärmetönung der Verfahrensschritte, nämlich der LOHC-Beladung und der LOHC-Entladung, einstellen. Insbesondere ist eine gezielte Beeinflussung der Belade- oder Entlade-Vorgänge durch eine gezielte Anordnung der katalytisch aktiven Feststoffe im Reaktionsbehälter möglich. Beispielsweise kann an einem Ort des einströmenden entladenen LOHC-Trägermediums eine erhöhte Menge des Entlade-Katalysatormaterials, insbesondere gezielt, angeordnet werden, um die Wärmetönung der wärmebildenden LOHC-Beladung abzusenken. Das Entlade-Katalysatormaterial dient als Verdünnung für das Belade-Katalysatormaterial, um eine Wärmeentwicklung im Reaktionsbehälter während der LOHC-Beladung zu vergleichmäßigen. Es ist auch denkbar, ein Belade-/Entlade-Katalysatormaterial zu verwenden, das sowohl den Beladevorgang als auch dem Entladevorgang katalysiert. Der Belade-/Entlade-Katalysator kann Ruthenium und Platin in fein verteilter Form aufweisen, die auf einem organischen oder anorganischen, insbesondere oxidischen, Trägermaterial angeordnet sind. Alternativ können Nickel und Palladium in fein verteilter Form auf dem Trägermaterial angeordnet sein. Die Investitionskosten für das Katalysatormaterial sind dann reduziert.

Eine Belade-/Entlade-Einheit, die temperierbar, insbesondere heizbar und kühlbar, ausgeführt ist, ermöglicht ein effektives Wechseln zwischen der Beladefunktion und der Entladefunktion der kombinierten Belade-/Entlade-Einheit. Für das Beladen ist typischerweise eine geringere Prozesstemperatur erforderlich als für das Entladen. Eine typische Temperaturdifferenz beträgt zwischen 10 und 300° K. Als vorteilhaft hat es sich erwiesen, für die Wärmeübertragung ein Wärmeträgermedium einzusetzen. Die Belade-/Entlade-Einheit führt zu erheblich verminderten Wärmeverlusten und zu einer höheren Dynamik während des Betriebs. Stillstandseiten von separaten Einheiten sind reduziert und insbesondere nicht vorhanden. Bei den aus dem Stand der Technik bekannten, separat ausgeführten Belade-Einheiten und Entlade-Einheiten existieren Zeiträume der Nichtnutzung, insbesondere für die Belade-Einheit während eines Zeitraums, in dem kein Wasserstoff zum Beladen zur Verfügung steht und für die Entlade-Einheit während eines Zeitraums, in dem kein Wasserstoff benötigt wird, also freigesetzt werden muss. Während eines Zeitraums der Nichtnutzung kühlen die separat ausgeführten Belade-Einheit und Entlade-Einheit aus und müssen bei Wiederinbetriebnahme, die nur wenige Stunden nach einem Auskühlen liegen kann, wieder beheizt werden. Ein dafür erforderlicher Energieaufwand und Zeitaufwand sind nachteilig. Dieser nachteilige Zusatzaufwand ist mit der erfindungsgemäßen Belade-/Entlade-Einheit überflüssig. In der kombinierten Belade-/Entlade-Einheit findet die LOHC-Beladung und die LOHC-Entladung wechselweise im selben temperierten Reaktionsbehälter statt. Da beide Vorgänge bei erhöhter Temperatur stattfinden, kühlt der Reaktionsbehälter weder nach einer LOHC-Beladung noch nach einer LOHC-Entladung aus. Das vorliegende Temperaturniveau kann bei einem Wechsel von dem Entlade-Vorgang auf den Belade-Vorgang bzw. von dem Belade-Vorgang auf den Entlade-Vorgang angeglichen werden. Insbesondere ist ein Aufheizen ausgehend von Umgebungstemperatur nicht erforderlich. Ein zu überbrückender Temperaturunterschied ist reduziert. Ein Zeitraum, in dem die Belade-/Entlade-Einheit nicht betrieben wird und, insbesondere auf Umgebungstemperatur abkühlt, ist reduziert und kann insbesondere gänzlich entfallen. Bei dem Wechsel der Betriebsweisen von dem Belade-Vorgang zu dem Entlade-Vorgang ist es lediglich erforderlich, die Temperaturdifferenz zwischen einer Belade-Temperatur und einer Entlade-Temperatur zu überwinden. Dadurch ergeben sich gegenüber dem Stand der Technik eine Energieeinsparung und insbesondere ein Dynamikgewinn aufgrund reduzierter Aufheizdauer. Die zu erreichenden jeweiligen Betriebspunkte für die Beladung und die Entladung werden schneller erreicht.

Eine Belade-/Entlade-Einheit mit einem Wärmetauscher zum Übertragen von Wärme zwischen dem Reaktionsbehälter und dem Wärmeträgermedium ermöglicht eine effektive Wärmeübertragung. Als Wärmetauscher sind beispielsweise Wärmeübertragungsplatten, Wärmeübertragungsrohrwendel, ein Strombrecher oder Wärmerohr, sogenannte heat pipes möglich, die insbesondere im Reaktionsbehälter angeordnet sind. Dadurch ist es insbesondere möglich, ausreichenden Wärmebedarf für die Entladung des Trägermediums bereitzustellen. Insbesondere findet die Dehydrierreaktion, also das Entladen, bei einer Temperatur von mindestens 200°C und insbesondere mindestens 250°C statt. Als Trägermedium eignen sich insbesondere verschiedene LOHC-Materialien. Es ist nicht erforderlich, als Trägermedium π-konjugierte Systeme zu verwenden. Die Flexibilität, insbesondere hinsichtlich des Trägermediums gegenüber der EP 1 475 349 A2, ist vergrößert. Vorteilhaft ist es, wenn der Wärmetauscher mit einem Wärmespeicher verbunden ist. Die bei der Beladung entstehende, frei werdende Wärme kann im Wärmespeicher gespeichert werden. Sofern die Belade-/Entlade-Einheit zum Entladen des Trägermediums betrieben wird, kann die Wärme aus dem Wärmespeicher über den Wärmetauscher wieder zugeführt werden. Sofern die Temperaturniveaus für die Beladung und Entladung unterschiedlich sind, kann eine zusätzliche Wärmequelle und/oder Kältequelle vorgesehen sein. Es ist beispielsweise möglich, dass das Beladen bei einer Prozesstemperatur von etwa 200°C erfolgt. Das Entladen kann beispielsweise bei einer Prozesstemperatur von etwa 300°C stattfinden. Die beim Beladen abgeführte und gespeicherte Wärme ist deshalb in dem genannten Fall nicht ausreichend für die Entladereaktion. In diesem Fall ist eine direkte Beheizung zusätzlich möglich.

Es ist auch möglich, die Prozesstemperatur bei dem Beladen dadurch zusteigern, dass der Reaktionsdruck gesteigert wird. Es ist beispielsweise möglich, die Beladetemperatur von etwa 200°C bei 50 bar durch Erhöhung des Prozessdrucks auf 100 bar auf etwa 300°C zu steigern. Die Beladung des Trägermediums ist sowohl bei 200°C Temperatur und 50 bar Prozessdruck als auch bei einer Prozesstemperatur von 300°C und einem Prozessdruck von 100 bar möglich. Dadurch ist es möglich, die bei der Beladereaktion entstehende Wärme über den Wärmetauscher abzuführen und in dem Wärmespeicher zu speichern. Die gespeicherte Wärme kann direkt und insbesondere ohne weitere Zuheizung in einem nachfolgenden Entlade-Prozess zur Verfügung gestellt werden. Eine derartige Wärmespeicherung ist energetisch hoch effizient. Der Wirkungsgrad der Belade-/Entlade-Einheit ist signifikant verbessert. Als Wärmespeicher kann beispielsweise ein Hochtemperatur-Wärmespeicher auf Basis von Salz vorgesehen werden. In diesem Fall ist es denkbar, die Beladung mit einer Vorlauftemperatur von 270°C gekühlt und einer Rücklauftemperatur von etwa 320°C durchzuführen. Entsprechend könnte die Entladereaktion mit einer Vorlauftemperatur von 320°C beheizt und einer Rücklauftemperatur von etwa 270°C durchgeführt werden. Während der Beladereaktion würde der Wärmespeicher mit warmem Wärmeträgermedium gefüllt, also thermisch aufgeladen und damit das Temperaturniveau in dem Wärmespeicher auf 320°C gesteigert. Bei der Entladereaktion wird der Wärmespeicher vom Wärmeträgermedium entleert, also thermisch entladen. Eine Zuheizung ist in diesem Fall entbehrlich.

Die Belade-/Entlade-Einheit ermöglicht eine vereinfachte und sichere Abschaltung während der LOHC-Entladung, also während Wasserstoff freigesetzt wird. Diese Abschaltung ist sicherheitstechnisch relevant, da die Freisetzung von Wasserstoff, der mit Luft brennbare und explosive Gemische bildet, beispielsweise im Fall einer Leckage abrupt gestoppt werden kann. Die Belade-/Entlade-Einheit kann über eine dafür vorgesehene Leitung zum Zuführen von entladenem LOHC in den Reaktionsbehälter verbunden sein. Diese Zuführleitung ist mess- und/oder regelungstechnisch angebunden. Im Normalbetrieb, also während des Entladens, dient diese Zuführleitung zur Versorgung der Belade-/Entlade-Einheit mit entladenem LOHC zur Beladung mit Wasserstoff. Sofern eine schnelle Abschaltung der Belade-/Entlade-Einheit aus dem Entladebetrieb erfolgen soll, und insbesondere eine schnelle Verminderung der Wasserstofffreisetzungsrate erforderlich ist, erfolgt dies mit der Belade-/Entlade-Einheit ohne zusätzlichen Apparate-technischen Aufwand durch das unmittelbare Zuleiten von entladenem, bevorzugt kaltem LOHC. Das zugeleitete, unbeladene LOHC-Trägermedium verdrängt das beladene LOHC-Trägermedium. Gleichzeitig führt das Zuführen des unbeladenen Trägermediums zu einer Abkühlung des Reaktionsbehälters. Das unbeladene LOHC-Trägermedium kann freigesetzten, noch in dem Reaktionsbehälter befindlichen Wasserstoff erneut stofflich binden und in eine sichere, nämlich chemisch gebundene Form überführen. Das spontane Wiederbeladen des zusätzlich, zugeführten unbeladenen Trägermediums während des Entladens innerhalb des Reaktionsbehälters ist durch die Belade-/Entlade-Einheit möglich, da sowohl das Beladen als auch das Entladen in der Belade-/Entlade-Einheit möglich sind. In einer aus dem Stand der Technik bekannten Entlade-Einheit bewirkt das Zuführen von unbeladenem Trägermedium kein Beladen mit Wasserstoff. Die Reaktionsbedingungen dafür sind in einer aus dem Stand der Technik bekannten separaten Entlade-Einheit dafür nicht gegeben. Die sicherheitstechnisch relevante Schnellabschaltung des Reaktionsbehälters im Entladezustand ist durch die Belade-/Entlade-Einheit ermöglicht. Insbesondere im Fall einer Wasserstoff-Leckage ist das Risiko einer Explosion reduziert. Die Belade-/Entlade-Einheit weist eine erhöhte Sicherheitsfunktion auf.

Zudem ist es möglich, die Dynamik der Belade-/Entlade-Einheit dadurch zu steigern, dass die Betriebstemperatur gesteigert wird. Dadurch, dass die Belade-/Entlade-Einheit entweder zum Beladen oder zum Entladen verwendet wird, sind Leerlaufzeiten der Einheit im Wesentlichen ausgeschlossen. Die Belade-/Entlade-Einheit befindet sich typischerweise im Dauerbetrieb. Ein Wiederaufheizen wegen zwischenzeitlichem Leerlaufbetrieb entfällt. Die Belade-/Entlade-Einheit weist eine verbesserte Dynamik auf, da beispielsweise nach erfolgter Entladung des Wasserstoff-Trägermediums unmittelbar ein Beladen mit Wasserstoff möglich ist. Die Belade-/Entlade-Einheit ist ausreichend durch den vorherigen Entladevorgang aufgeheizt.

Wirkungsgrad und Energieeffizienz der Belade-/Entlade-Einheit sind erhöht.

Eine Anlage zum Speichern von Energie, insbesondere in Form von Wasserstoff mit einer erfindungsgemäßen Belade-/Entlade-Einheit weist zumindest die Vorteile der Belade-/Entlade-Einheit auf, worauf hiermit verwiesen wird.

Die Erfindung ermöglicht also eine anlagentechnisch vereinfachte und insbesondere unkomplizierte Speicherung von Energie in Form von Wasserstoff. Eine derartige Anlage ist insbesondere für geringeren Leistungsbedarf, in kompakten und/oder kostengünstigen Bauformen, insbesondere in netzfernen Gebieten, als autarke Anlage vorteilhaft.

Eine Anlage mit einer ersten Trägermedium-Zuführleitung zum Zuführen des entladenen Trägermediums zu der Belade-/Entlade-Einheit und/oder eine erste Trägermedium-Abführleitung zum Abführen des entladenen Trägermediums aus der Belade-/Entlade-Einheit, vereinfacht das Zu- und Abführen von entladenem Trägermedium. Die erste Trägermedium-Zuführleitung und die erste Trägermedium-Abführleitung können auch als kombinierte erste Trägermedium-Zuführ-/Abführleitung ausgeführt sein. Die kombinierte erste Trägermedium-Zuführ-/Abführleitung ermöglicht eine bidirektionale Strömung des Trägermediums. Eine erste Trägermedium-Zuführleitung und -abführleitung im Sinne der Erfindung kann auch durch eine entsprechende Zuführöffnung oder Abführöffnung in dem Reaktionsbehälter ausgeführt sein.

Eine Anlage mit einer ersten Trägermedium-Speichereinheit vereinfacht das Speichern des entladenen Trägermediums. Die Anlage ermöglicht einen unkomplizierten Zugriff auf das entladene Trägermedium. Die unkomplizierte Bereitstellung von entladenem Trägermedium, das zum Beladen mit Wasserstoff in dem Reaktionsbehälter benötigt wird, ist gewährleistet. Die erste Trägermedium-Speichereinheit kann beispielsweise als Tankbehälter ausgeführt sein. Eine erste Trägermedium-Speichereinheit im Sinne der Erfindung kann aber auch ein Anschluss an ein möglicherweise vorhandenes, insbesondere öffentliches Leitungsnetz zur Versorgung mit entladenem Trägermedium sein. Insbesondere ist es auch denkbar, dass entladenes Trägermedium von einem räumlich entfernten Ort zu der Anlage transportiert wird.

Eine Anlage mit einer zweiten Trägermedium-Zuführleitung zum Zuführen des beladenen Trägermediums zu der Belade-/Entlade-Einheit und/oder eine zweite Trägermedium-Abführleitung zum Abführen des beladenen Trägermediums aus der Belade-/Entlade-Einheit ermöglicht das Zuführen und Abführen von beladenem Trägermedium. Die zweite Trägermedium-Zuführleitung und die zweite Trägermedium-Abführleitung können in einer kombinierten zweiten Trägermedium-Zuführ-/Abführleitung als bidirektionale Leitung ausgeführt sein. Die zweite Trägermedium-Zuführleitung und/oder die zweite Trägermedium-Abführleitung können auch jeweils als Zuführöffnung und/oder Abführöffnung in dem Reaktionsbehälter ausgeführt sein, um mobile Anschlüsse wie beispielsweise eine Verbindungsleitung eines Tankfahrzeugs anzuschließen.

Eine Anlage mit einer zweiten Trägermedium-Speichereinheit vereinfacht das Speichern des beladenen Trägermediums. Die zweite Trägermedium-Speichereinheit ist insbesondere über die zweite Trägermedium-Zuführleitung und/oder über die zweite Trägermedium-Abführleitung mit dem Reaktionsbehälter verbunden. Das beladene Trägermedium kann unmittelbar von dem Reaktionsbehälter in die zweite Trägermedium-Speichereinheit überführt werden.

Es ist auch möglich, auf eine separate Ausführung der ersten und der zweiten Trägermedium-Speichereinheit zu verzichten. Die Belade-/Entlade-Einheit mit dem darin vorhandenen Trägermedium selbst dient dann als Speichereinheit. Bei einer derartigen Ausführung ist der anlagentechnische Aufwand reduziert. Das LOHC-Trägermedium befindet sich ausschließlich in der Belade-/Entlade-Einheit. In dieser Ausführungsform dient die Belade-/Entlade-Einheit zum Beladen, Entladen, Aufbewahren und wieder Entladen des LOHC-Trägermediums.

Eine Anlage mit einer mit der Belade-/Entlade-Einheit verbindbaren Wasserstofferzeugungs-Einheit zum Erzeugen von Wasserstoff gewährleistet die Bereitstellung des zu speichernden Wasserstoffs. Insbesondere wird Wasserstoff durch Elektrolyse mittels eines Elektrolyseurs gewonnen. Der Elektrolyseur wird mit elektrischem Strom betrieben, der insbesondere aus regenerativen Energien gewonnen worden ist, insbesondere mittels photovoltaischer Anlagen oder mittels Windkraftanlagen. Insbesondere kommt ein Elektrolyseur zum Einsatz, der insbesondere auch als Brennstoffzelle dienen kann. Es ist auch möglich, eine separate Brennstoffzelle bereitzustellen. Es ist möglich, einen zusätzlichen Wasserstoffkompressor vorzusehen, der den im Elektrolyseur erzeugten Wasserstoff verdichtet. Der verdichtete Wasserstoff kann dann der Belade-/Entlade-Einheit zugeführt und dort genutzt werden.

Eine Anlage mit einer mit der Belade-/Entlade-Einheit verbundenen Wasserstoffverwertungs-Einheit ermöglicht das unmittelbare Verwerten des freigesetzten Wasserstoffs aus der Belade-/Entlade-Einheit. Die Anlage ermöglicht also insbesondere die Rückgewinnung von Energie aus gespeichertem Wasserstoff. Als Wasserstoffverwertungs-Einheit ist insbesondere eine Brennstoffzelle denkbar, um aus dem Wasserstoff elektrischen Strom zu erzeugen. Alternativ oder zusätzlich ist auch eine Verbrennung des Wasserstoffs oder eine stoffliche Nutzung des Wasserstoffs möglich.

In einer vorteilhaften Ausgestaltung der Anlage ist diese als mobile Batterie und insbesondere mit integrierter Trägermedium-Speichereinheit ausgeführt. Separate Speichereinheiten zur Speicherung von beladenem und/oder entladenem Trägermedium sind entbehrlich. Insbesondere ist ein separater Wärmespeicher nicht erforderlich. Die maximal mögliche Menge des Trägermediums ist durch die Kapazität, insbesondere das Innenvolumen, des Reaktionsbehälters begrenzt. Je nach Verfügbarkeit von elektrischer Energie, insbesondere in Form von Wasserstoff, kann die Anlage zum Be- oder Entladen des im Reaktorgehäuse befindlichen Trägermaterials eingesetzt werden. Eine derartige Anlage funktioniert wie eine Batterie. Die Anlage ist flexibel und ortsunabhängig einsetzbar. Eine derartige Anlage ist kompakt ausgeführt. Um ausreichend Wärme für die Entladung bereitzustellen, kann der Reaktionsbehälter mit einer zusätzlichen Heizung verbunden sein. Eine derart mobile Einheit könnte mittels eines Transportmittels, insbesondere eines Lastkraftwagenauflegers, auf Schienen und/oder zu Wasser transportiert werden.

Ein Verfahren zum Speichern von Energie, insbesondere in Form von Wasserstoff, basiert auf der Bereitstellung einer Belade-/Entlade-Einheit gemäß der Erfindung, wobei das Beladen des Trägermediums mit Wasserstoff in dem Reaktionsbehälter, insbesondere zu einem ersten Zeitpunkt, erfolgt. Das Entladen des Wasserstoffs vom beladenen Trägermedium erfolgt ebenfalls in dem Reaktionsbehälter, insbesondere zu einem zweiten Zeitpunkt, der sich von dem ersten Zeitpunkt des Beladens unterscheidet. Das Verfahren weist im Wesentlichen die gleichen Vorteile auf wie die erfindungsgemäße Belade-/Entlade-Einheit, worauf hiermit verwiesen wird. Erfindungswesentlich ist die Erkenntnis, dass sowohl das Beladen als auch das Entladen in ein und demselben Reaktionsbehälter zeitversetzt stattfinden können. Insbesondere ist ein kollidierender Betrieb, also ein zeitgleiches Beladen und Entladen bei dem erfindungsgemäßen Verfahren ausgeschlossen, da insbesondere die LOHC-Beladung während eines energiereichen Zeitraums stattfindet, währenddessen ein Energieüberschuss vorliegt und somit überschüssiger Wasserstoff chemisch gebunden und insbesondere anschließend gespeichert werden soll. Dies erfolgt insbesondere tagsüber mittels einer photovoltaischen Anlage und/oder zu einer windreichen Zeit mittels einer Windkraftanlage. Dagegen findet eine LOHC-Entladung während eines energiearmen Zeitraums statt, währenddessen ein Energiebedarf herrscht und chemisch gebundener Wasserstoff freigesetzt und insbesondere einer weiteren Verwertung zugeführt werden soll.

Ein Verfahren, bei dem während des Beladens von Trägermedium mit Wasserstoff ein Belade-/Entlade-Katalysator regeneriert, ermöglicht eine längere Haltbarkeit des Belade-/Entlade-Katalysators. Insbesondere weist der Belade-/Entlade-Katalysator eine durchschnittlich höhere Aktivität auf. Abnutzungserscheinungen, die den Wirkungsgrad des Belade-/Entlade-Katalysators und damit des Verfahrens insgesamt beeinträchtigen, sind vermieden. Aufgrund der längeren Haltbarkeit ergeben sich längere Katalysatorwechselintervalle und damit reduzierte Ausfallzeiten. Aufgrund der verfahrensintrinsischen Regeneration des Belade-/Entlade-Katalysators kann dieser unter harscheren Reaktionsbedingungen und daher mit höherer Aktivität betrieben werden. Damit weist die Anlage mit der Belade-/Entlade-Einheit eine höhere Leistung als eine Anlage gemäß dem Stand der Technik bei gleicher Baugröße auf. Um eine Anlage mit einer aus dem Stand der Technik bekannten Leistung zu realisieren, kann eine erfindungsgemäße Anlage eine reduzierte Baugröße aufweisen.

Ein Verfahren, bei dem Restwärme eines jeweils vorherigen Verfahrensschrittes für das Beladen oder Entladen genutzt wird, ermöglicht ein besonders effektives und insbesondere zeitgünstiges Betreiben der Belade-/Entlade-Einheit. Es ist insbesondere nicht erforderlich, dass eine separate Einheit nach dem Durchführen eines Verfahrensschrittes bis auf Umgebungstemperatur abkühlen muss, da die genannte Einheit für einen längeren Zeitraum ungenutzt, also funktionslos, bleibt. Insbesondere eine Einheit, die beispielsweise im Tag- und Nacht-Rhythmus wechselweise zum Beladen und Entladen genutzt wird, erfordert lediglich einen Ausgleich der Temperaturdifferenz der unterschiedlichen Prozesstemperaturen für das Beladen und Entladen. Diese Temperaturdifferenz ist reduziert. Die erfindungsgemäße Belade-/Entlade-Einheit bleibt dauerhaft warm. Ein Abkühlen auf Umgebungstemperatur ist nicht vorgesehen. Der Wirkungsgrad einer derartigen Anlage ist dadurch verbessert. Insbesondere ist auch die Dauer einer Vorheizphase reduziert. Das Verfahren kann flexibler, insbesondere mit reduzierten Vorheizphasen, eingesetzt werden. Insbesondere nach einem Entladevorgang, der insbesondere nachts stattfindet, für einen tagsüber stattfindenden Beladevorgang des LOHC-Trägermediums ist es ausreichend, wenn die Belade-/Entlade-Einheit von der vergleichsweise höheren Prozesstemperatur während des Entladens auf die erforderliche Prozesstemperatur während des Beladens abkühlt. Eine zusätzliche Wärmezufuhr ist nicht erforderlich. Dagegen müsste eine separat ausgeführte Belade-Einheit gemäß dem Stand der Technik nach dem Entladevorgang von Umgebungstemperatur auf die Prozesstemperatur in der Belade-Einheit aufgeheizt werden. Ein derartiger Aufheizvorgang kann komplett entfallen. Der zusätzliche Energieaufwand entfällt.

Ein Verfahren, das ein Schnellabschalten des Reaktionsbehälters, insbesondere während des Entladens, ermöglicht, weist eine erhöhte Prozesssicherheit auf.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine schematische Darstellung einer erfindungsgemäßen Anlage zum Speichern von Energie und
- Fig. 2: eine Fig. 1 entsprechende Darstellung einer Anlage gemäß einer weiteren Ausführungsform.

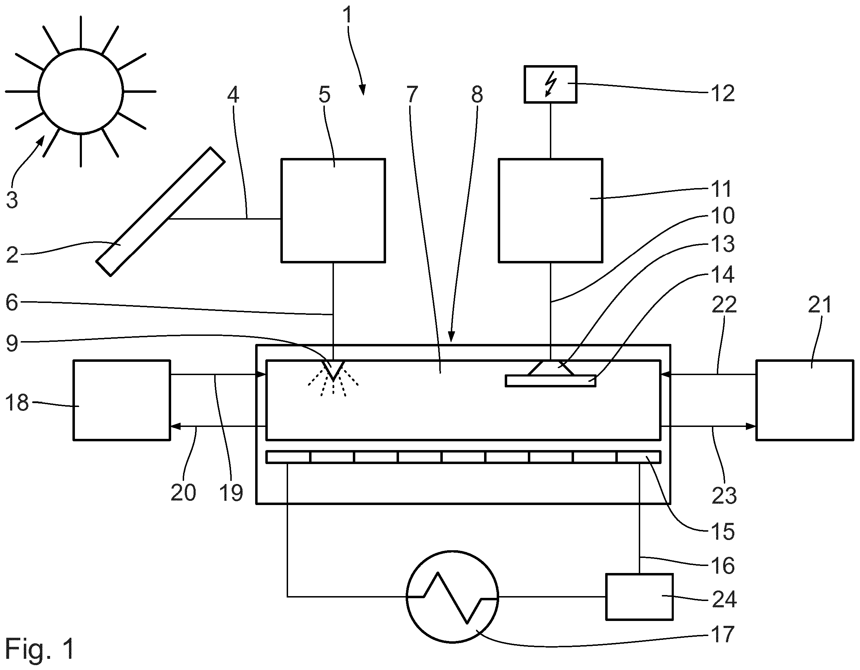

Eine in Fig. 1 schematisch dargestellte Anlage 1 dient zum Speichern von Energie, insbesondere in Form von Wasserstoff. Die Anlage 1 umfasst eine Stromerzeugungs-Einheit 2 beispielsweise in Form einer Photovoltaik-Anlage. Die Stromerzeugungs-Einheit 2 ist geeignet, um Energie, die von regenerativen Energiequellen 3 bereitgestellt wird, zum Erzeugen von elektrischem Strom zu nutzen. Die Energiequellen 3 sind regenerative, insbesondere unstete, Energieformen. Die Stromerzeugungs-Einheit 2 kann auch als Windkraftwerk und/oder Wasserkraftwerk ausgeführt sein. Gemäß dem gezeigten Ausführungsbeispiel ist die regenerative Energiequelle 3 die Sonne. Die Stromerzeugungs-Einheit 2 ist über eine Stromleitung 4 mit einer Wasserstofferzeugungs-Einheit 5 verbunden. Die Wasserstofferzeugungs-Einheit 5 ist gemäß dem gezeigten Ausführungsbeispiel als Elektrolyseur ausgeführt. Der Elektrolyseur ermöglicht die Spaltung von Wasser in Wasserstoff und Sauerstoff. Über eine Rohrleitung 6 ist der Elektrolyseur 5 an einen Reaktionsbehälter 7 einer Belade-/Entlade-Einheit 8 angeschlossen. An einem dem Reaktionsbehälter 7 zugewandten Ende weist die Rohrleitung 6 mindestens eine Verteileinrichtung 9 auf, um dem Reaktionsbehälter 7 den zuzuführenden Wasserstoff in verteilter Form gleichmäßig über den Behälterquerschnitt zuzuführen.

Der Reaktionsbehälter 7 kann unterschiedliche geometrische Formen und Dimensionierungen aufweisen. Wesentlich ist, dass in dem Reaktionsbehälter 7 ein Belade-/Entlade-Katalysator vorgesehen ist. Für die Funktion der Anlage 1 und insbesondere der Belade-/Entlade-Einheit 8 ist ferner wesentlich, dass das Trägermedium, insbesondere das LOHC-Trägermedium, intensiv mit dem Belade-/Entlade-Katalysator kontaktiert wird. Außerdem wird der Reaktionsbehälter 7 über einen Wärmetauscher temperiert.

Besonders geeignete Bauformen des Reaktionsbehälters 7 sind ein druckfester Rohrreaktor, ein Rührkesselautoklav oder ein druckfester Schlaufenreaktor.

Ein als Rohrreaktor ausgeführter Reaktionsbehälter 7 kann senkrecht oder waagrecht in der Belade-/Entlade-Einheit 8 angebracht sein. In einen senkrecht angeordneten Rohrreaktor wird zur Beladung das zumindest teilweise entladene Wasserstoff-Trägermedium von oben auf ein Katalysatorbett in dem Reaktionsbehälter 7 gegeben. Das Wasserstoff-Trägermedium läuft schwerkraftbedingt entlang des Katalysatorbettes nach unten. Der Wasserstoff kann beispielsweise oben auf einem Druck von etwa 30 bar zugeführt werden und folgt der Strömungsrichtung des Wasserstoff-Trägermediums nach unten. In diesem Fall wird der senkrecht angeordnete Rohrreaktor im Gleichstrom betrieben. Es ist auch ein Betrieb im Gegenstrom denkbar. Die bei der Reaktion freiwerdende Wärme wird über den Wärmetauscher 15 abgeführt und kann beispielsweise in einem Wärmespeicher 24 gespeichert werden. Das beladene LOHC-Trägermedium verlässt an einer Unterseite des Reaktorbehälters 7 den Rohrreaktor. Vorteilhaft ist eine "dead-end"-Fahrweise des Reaktors, bei dem eine Flüssigkeitssperre aus dem Wasserstoff-Trägermedium den Austritt aus dem Reaktionsbehälter 7 verhindert. Denkbar sind auch eine Abtrennung des weitestgehend beladenen Wasserstoff-Trägermediums und eine Rückführung des unverbrauchten Wasserstoffs. Zum Ende der Beladung ist der Katalysator mit weitestgehend hydriertem Wasserstoff-Trägermedium benetzt. Die Zufuhr von weiterem Wasserstoff-Trägermedium in den Reaktionsbehälter wird gestoppt. Nach Abschalten der Kühlung durch den Wärmetauscher 15 verbleibt der Reaktionsbehälter 7 auf Belade-Temperatur von beispielsweise 150°C und bei einem Belade-Druck von beispielsweise 30 bar. Zum Zeitpunkt der Entladung kann der im Rohr noch verbliebene Wasserstoff einer sofortigen Nutzung zugeführt werden, insbesondere zum Aufheizen des Reaktionsbehälters 7 von 150°C auf die Entlade-Temperatur von etwa 300°C. Danach wird insbesondere von unten weitestgehend beladenes Wasserstoff-Trägermedium aus einem Tank zugeführt und über den Wärmetauscher 15 die Dehydrierwärme, die für das Freisetzen des Wasserstoffs während des Entladens notwendig ist, im Reaktionsbehälter 7 bereitgestellt. Der freiwerdende Wasserstoff bewegt sich aufgrund einer geringeren Dichte im Reaktionsbehälter nach oben und begünstigt die nach oben gerichtete Strömung des Wasserstoff-Trägermediums. Am oberen Ende des Reaktionsbehälters 7, also am Kopf des Reaktors, werden das entladene Wasserstoff-Trägermedium und Wasserstoff kontinuierlich entnommen.

Es ist auch eine waagrechte Anordnung des Reaktionsbehälters 7 als Strömungsrohr möglich. Das Strömungsrohr besitzt dann auf einer ersten Seite eine Zufuhr für das Wasserstoff-Trägermedium und auf einer gegenüberliegenden zweiten Seite eine Abfuhr für das Wasserstoff-Trägermedium. Insbesondere ist der Reaktionsbehälter 7 zylindrisch ausgeführt, wobei Zufuhr und Abfuhr an den gegenüberliegenden Stirnseiten des Zylinders angebracht sind.

Der Reaktionsbehälter 7 kann auch als kontinuierlich betriebener druckfester Schlaufenreaktor ausgeführt sein. Der Schlaufenreaktor kann eine Umwälzpumpe, beispielsweise eine Zahnradpumpe, aufweisen, die das Flüssigvolumen im Reaktorbehälter 7 umwälzt. Alternativ sorgt auch der einströmende oder im Reaktionsbehälter 7 gebildete Wasserstoffstrom für eine Umwälzung im Schlaufenreaktor. Zu einem Zeitpunkt nach dem Entladen kann der Reaktionsbehälter mit einem teilweise entladenen Wasserstoff-Trägermedium bei einer Temperatur von beispielsweise 300°C gefüllt sein. Um eine erneute Beladung des im Reaktorbehälters 7 befindlichen oder frisch zugeführten, zumindest teilweise entladenen Wasserstoff-Trägermediums zu erreichen, wird der Reaktionsbehälter 7 unter Umwälzung und unter Nutzung des Wärmetauschers 15 auf die erforderliche Reaktionstemperatur von ca. 150°C abgekühlt. Die Kühlung kann zweckmäßig gegen einen geeigneten Wärmespeicher 24 erfolgen. Die aus dem Reaktionsbehälter 7 abgeführte Wärme wird also dem Wärmespeicher 24 zugeführt und dort gespeichert und kann zu einem späteren Zeitpunkt für eine Erwärmung genutzt werden. Wenn die Reaktionstemperatur in dem Reaktionsbehälter 7 erreicht ist, wird ein Wasserstoffdruck von beispielsweise 30 bar aus der Wasserstoff-Erzeugungseinheit 5, beispielsweise dem Elektrolyseur, aufgebracht. Die entstehende Reaktionswärme wird durch den Wärmetauscher 15 abgeführt. Zweckmäßigerweise kann damit ein Wärmespeicher 24 beheizt werden. Während des Beladens wird entladenes Wasserstoff-Trägermedium kontinuierlich zugeführt. Gleichermaßen wird beladenes Wasserstoff-Trägermedium aus dem Reaktionsbehälter 7 abgeführt, so dass der Füllstand des Reaktorbehälters 7 stets annähernd gleich bleibt. Zum Beenden des Beladens wird die Wasserstoffzufuhr gestoppt. Der im Reaktionsbehälter 7 vorhandene Wasserstoff wird vom weiterhin zugeführten, unbeladenen Wasserstoff-Trägermedium aufgenommen und chemisch gebunden. Sobald der Druck unter beispielsweise 5 bar abgefallen ist, werden die Wasserstoff-Trägemediumzufuhr und -abfuhr sowie der Betrieb der Umwälzpumpe gestoppt. Die Kühlung wird unterbrochen. Im Reaktionsbehälter 7 liegt ein weitgehend hydriertes Wasserstoff-Trägemedium bei einer Temperatur von etwa 150°C und einem Wasserstoffdruck von 5 bar vor. Um das Entladen zu starten, wird der Reaktionsbehälter 7 über den Wärmetauscher 15 beheizt. Dies kann beispielsweise unter Nutzung des noch im Reaktionsbehälter 7 befindlichen Wasserstoffs geschehen. Der beim Entladen gebildete Wasserstoff sorgt für eine Umwälzung des Reaktionsvolumens im Schlaufenreaktor. Beladenes Wasserstoff-Trägermedium wird dem Reaktionsbehälter 7 zugeführt und in gleicher Weise entladenes Wasserstoff-Trägermedium abgeführt. Sobald der durch das Entladen entstandene Wasserstoff einen ausreichenden Druckaufbau erzeugt hat, wird die Wasserstoffabfuhr über die Rohrleitung 10 geöffnet.

Gemäß einer weiteren Ausführungsform kann der Reaktionsbehälter 7 als kontinuierlich betriebener Rührkesselautoklav ausgeführt sein. Der Rührkesselautoklav weist eine Rührvorrichtung auf, die insbesondere als Begasungsrührer ausgeführt ist. Zu einem Zeitpunkt nach dem Entladen kann der Reaktionsbehälter 7 mit einem teilweise entladenen Wasserstoff-Trägermedium bei einer Temperatur von beispielsweise 300°C gefüllt sein. Um ein erneutes Beladen des im Reaktionsbehälter 7 befindlichen oder frisch zugeführten, zumindest teilweise entladenen Wasserstoff-Trägermediums zu erreichen, wird der Reaktionsbehälter 7 unter Rühren und unter Nutzen des Wärmetauschers 15 auf die Reaktionstemperatur von 150°C abgekühlt. Die Kühlung kann zweckmäßig gegen den Wärmespeicher 24 erfolgen. Wenn die Reaktionstemperatur erreicht ist, wird ein Wasserstoffdruck von beispielsweise 30 bar aus der Wasserstofferzeugungseinheit 5, beispielsweise einem Elektrolyseur; aufgebracht. Die entstehende Reaktionswärme wird durch den Wärmetauscher 15 abgeführt. Zweckmäßiger Weise kann ein Wärmespeicher 24 beheizt werden. Während der Beladung wird kontinuierlich entladenes Wasserstoff-Trägermedium zugeführt. Gleichermaßen wird das beladene Wasserstoff-Trägermedium aus dem Reaktionsbehälter 7 abgeführt, so dass der Füllstand des Reaktionsbehälters 7 stets annähernd gleich bleibt. Zum Beenden des Beladens wird die Wasserstoffzufuhr gestoppt. Der im Reaktionsbehälter 7 vorhandene Wasserstoff wird vom weiterhin zugeführten unbeladenen Wasserstoff-Trägermedium aufgenommen. Wenn der Druck unter beispielsweise 5 bar abgefallen ist, werden die Wasserstoff-Trägermedium-Zufuhr und -abfuhr sowie der Begasungsrührer gestoppt. Ebenso wird die Kühlung unterbrochen. Im Reaktionsbehälter 7 liegt ein weitgehend hydriertes Wasserstoff-Trägermedium bei einer Temperatur von etwa 150°C und bei einem Wasserstoffdruck von 5 bar vor. Um das Entladen einzuleiten, wird der Reaktionsbehälter 7 mit Hilfe des Wärmetauschers 15 beheizt. Dies kann beispielsweise unter Nutzung des noch im Reaktionsbehälter 7 befindlichen Wasserstoffs geschehen. Der Rührer wird eingeschaltet. Beladenes Wasserstoff-Trägermedium wird dem Reaktionsbehälter 7 zugeführt und in gleicher Weise entladenes Wasserstoff-Trägermedium abgeführt. Sobald der durch die Entladereaktion entstehende Wasserstoff einen ausreichenden Druckaufbau erzeugt hat, wird die Wasserstoffabfuhr über die Rohrleitung 10 geöffnet.

Eine spezielle Ausführungsform des Reaktionsbehälters 7 ist ein diskontinuierlich betriebener Rührkesselautoklav, also ein Reaktionsbehälter, der das gesamte in der Anlage vorhandene Trägermedium enthält. In dieser speziellen Ausführungsform weist der Rührkesselautoklav einen Anschluss für Zu- und Abfuhr von Wasserstoff und eine Rührvorrichtung auf. Der Reaktionsbehälter ist außerdem mit dem Wärmetauscher 15 versehen und enthält den Belade-/Entlade-Katalysator.

Der Reaktionsbehälter 7 ist über die Rohrleitung 10 mit einer Wasserstoffverwertungs-Einheit 11 verbunden. Gemäß dem gezeigten Ausführungsbeispiel ist die Wasserstoffverwertungs-Einheit 11 als Brennstoffzelle ausgeführt, um Wasserstoff aus dem Reaktionsbehälter 7 zu verströmen, also in elektrischen Strom umzusetzen. Der in der Brennstoffzelle erzeugte elektrische Strom kann in einer geeigneten Strom-Speichereinheit gespeichert und/oder in ein öffentliches Stromleitungsnetz 12 eingespeist werden. Um eine Abführung von in dem Reaktionsbehälter 7 gebildeten Wasserstoff zu ermöglichen, kann eine Trenn-Einheit 13 und eine Absaugung 14vorgesehen sein. Die Trenn-Einheit 13 und die Absaugung 14 sind insbesondere an einem dem Reaktionsbehälter 7 zugewandten Ende der Rohrleitung 10 angeordnet. Die Trenn-Einheit 13 ermöglicht ein Trennen des Wasserstoffs von verdampftem Trägermedium, insbesondere dem LOHC-Trägermedium. Die Trenn-Einheit 13 kann als Kondensationsstrecke, gekühlte Einbauten, Molekularsieb oder Aktivkohlebett ausgeführt sein. Die Absaugung 14 kann die Wasserstoffabfuhr aus der Belade-/Entlade-Einheit 8 unterstützen, beispielsweise wenn das Druckniveau der Rohrleitung 10 über dem des Reaktionsbehälters 7 liegt. Die Absaugung 14 kann auch entfallen, insbesondere wenn das Druckniveau der Rohrleitung 10 unter dem des Reaktionsbehälters 7 liegt.

Ein als katalytisch aktiver Feststoff oder Gemisch von katalytisch aktiven Feststoffen ausgeführter Katalysator wird beim Durchströmen des Reaktionsbehälters 7 von dem flüssigen Trägermedium kontaktiert.

Die Belade-/Entlade-Einheit 8 weist den Wärmetauscher 15 auf, der eine Wärmeübertragung zwischen dem Reaktionsbehälter 7 und einem in dem Wärmetauscher 15 angeordneten Wärmeträgermedium ermöglicht. Gemäß dem gezeigten Ausführungsbeispiel weist der Wärmetauscher 15 mehrere Wärmeübertragerplatten auf. Die Wärmeübertragerplatten sind über eine Kreislauf-Rohrleitung 16 und mit einem außerhalb der Belade-/Entlade-Einheit 8 angeordneten Wärmeübertrager 17 in Kreislaufverbindung. Der Wärmetauscher 15 kann sowohl zum Erwärmen als auch zum Kühlen des Reaktionsbehälters 7 eingesetzt werden. Es sind auch andere Ausführungen des Wärmetauschers denkbar. Insbesondere ist es denkbar, dass Wärmerohre, sogenannte heat pipes, innerhalb des Reaktionsbehälters 7 angeordnet sind.

Die Anlage 1 umfasst ferner eine erste Trägermedium-Speichereinheit 18 zum Speichern des entladenen Trägermediums. Die erste Trägermedium-Speichereinheit 18 ist über eine erste Trägermedium-Zuführleitung 19 mit dem Reaktionsbehälter 7 verbunden. Die erste Trägermedium-Zuführleitung 19 dient zum Zuführen des entladenen Trägermediums aus der ersten Trägermedium-Speichereinheit 18 in den Reaktionsbehälter 7 der Belade-/Entlade-Einheit 8. Über eine erste Trägermedium-Abführleitung 20 ist die erste Trägermedium-Speichereinheit 18 mit dem Reaktionsbehälter 7 verbunden. Die erste Trägermedium-Abführleitung 20 dient zum Abführen des entladenen Trägermediums aus dem Reaktionsbehälter 7 der Belade-/Entlade-Einheit 8.

Die Anlage 1 weist ferner eine zweite Trägermedium-Speichereinheit 21 auf, die zum Speichern des beladenen Trägermediums, insbesondere LOHC-Trägermediums, dient. Die zweite Trägermedium-Speichereinheit 21 ist über eine zweite Trägermedium-Zuführleitung 22 mit dem Reaktionsbehälter 7 verbunden. Die zweite Trägermedium-Zuführleitung 22 dient zum Zuführen des beladenen Trägermediums in den Reaktionsbehälter 7 der Belade-/Entlade-Einheit 8. Die zweite Trägermedium-Speichereinheit 21 ist über eine zweite Trägermedium-Abführleitung 23 mit dem Reaktionsbehälter 7 verbunden. Die zweite Trägermedium-Abführleitung 23 dient zum Abführen des beladenen Trägermediums aus dem Reaktionsbehälter 7 der Belade-/Entlade-Einheit 8.

Über die Festlegung der Zuführ- und/oder Abführöffnungen, über die mittels der Trägermedium-Zuführleitungen 19, 22 und der Trägermedium-Abführleitungen 20, 23 beladenes und/oder entladenes Trägermedium zu und/oder abgeführt wird, werden die Strömungswege des beladenen und entladenen Trägermediums innerhalb des Reaktionsbehälters festgelegt. Vorteilhaft ist es, wenn die Strömungswege derart festgelegt sind, dass eine intensive Kontaktierung des Belade-/Entlade-Katalysators innerhalb des Reaktionsbehälters 7 gewährleistet ist. Gemäß dem gezeigten Ausführungsbeispiel sind dazu die der ersten Trägermedium-Zuführleitung 19 und der zweiten Trägermedium-Abführleitung 23 zugeordneten Zuführ- bzw. Abführöffnungen an gegenüberliegenden Seitenwänden des Reaktionsbehälters 7 angeordnet. Dies gilt gleichermaßen für die der zweiten Trägermedium-Zuführleitung 22 und der ersten Trägermedium-Abführleitung 20 zugeordneten Abführ- bzw. Zuführöffnungen. Dadurch ist gewährleistet, dass beispielsweise über die erste Trägermedium-Zuführleitung 19 zugeführtes entladenes Trägermedium nach dem Beladen in dem Reaktionsbehälter 7 über die zweite Trägermedium-Abführleitung 23 als entladenes Trägermedium abgeführt wird. Dabei folgt das Trägermedium einem Strömungsweg quer durch den Reaktionsbehälter. Katalysatoren können entsprechend vorteilhaft und gezielt dort angeordnet werden, wo eine intensive Kontaktierung erfolgt.

Nachfolgend wird die Funktionsweise der Anlage 1 näher erläutert. Aus regenerativen Energiequellen 3 wird mittels einer Stromerzeugungs-Einheit 2 Strom erzeugt. Dieser Strom dient in der Wasserstoff-Erzeugungseinheit 5 zur Erzeugung von Wasserstoff, der über eine Verteileinrichtung 9 in verteilter Form gleichmäßig über einen Behälterquerschnitt des Reaktionsbehälters 7 zugeführt wird. Der zugeführte Wasserstoff dient zum Beladen des entladenen Trägermediums aus der ersten Trägermedium-Speichereinheit 18 in Form einer katalysierten Hydrierreaktion am Belade-/Entlade-Katalysator, der sich im Reaktionsbehälter 7 befindet. Das mit Wasserstoff beladene, also hydrierte, Trägermedium wird aus dem Reaktionsbehälter 7 über die zweite Trägermedium-Abführleitung 23 der zweiten Trägermedium-Speichereinheit 21 zugeführt und kann dort gespeichert werden. Das Beladen vom Trägermedium mit Wasserstoff findet während eines energiereichen Zeitraums statt, insbesondere tagsüber, wenn die Sonne scheint und/oder zu windreichen Zeiten.

Während eines energiearmen Zeitraums, beispielsweise nachts, kann ein Entladen erfolgen. Dazu wird beladenes Trägermedium aus der zweiten Trägermedium-Speichereinheit 21 über die zweite Trägermedium-Zuführleitung 22 in den Reaktionsbehälter 7 gefördert. Dort wird die Entladung des Wasserstoffs von dem beladenen Trägermedium in Form einer katalytischen Dehydrierreaktion am Belade-/Entlade-Katalysator im Reaktionsbehälter 7, durchgeführt. Der freigesetzte Wasserstoff kann mittels der Trenn-Einheit 13 von dem Trägermedium getrennt und über die Absaugung 14 und die Rohrleitung 10 der Wasserstoffverwertungs-Einheit zugeführt werden. Beispielsweise erfolgt eine Verstromung in einer Brennstoffzelle, wobei elektrischer Strom dem öffentlichen Stromleitungsnetz 12 zugeführt werden kann.

Zusätzliche Vorteile des erfindungsgemäßen Verfahrens sind die Nutzung von Restwärme eines vorangegangenen Verfahrensschrittes, die Regeneration eines Entlade-Katalysatormaterials während des Beladens und eine erhöhte Sicherheit des Verfahrens durch sehr effiziente Möglichkeiten, die Wasserstoffbildung während des Entladens schnell und unmittelbar zu stoppen. Wesentlich ist die erfinderische Erkenntnis, dass ein und derselbe, also ein einziger, Reaktionsbehälter 7 genutzt werden kann, um die zeitlich voneinander getrennten Prozessschritte Entladen und Beladen durchzuführen. Insbesondere wurde erkannt, dass die für die beiden Prozessschritte erforderlichen Katalysator-Materialien sich nicht gegenseitig negativ beeinflussen.

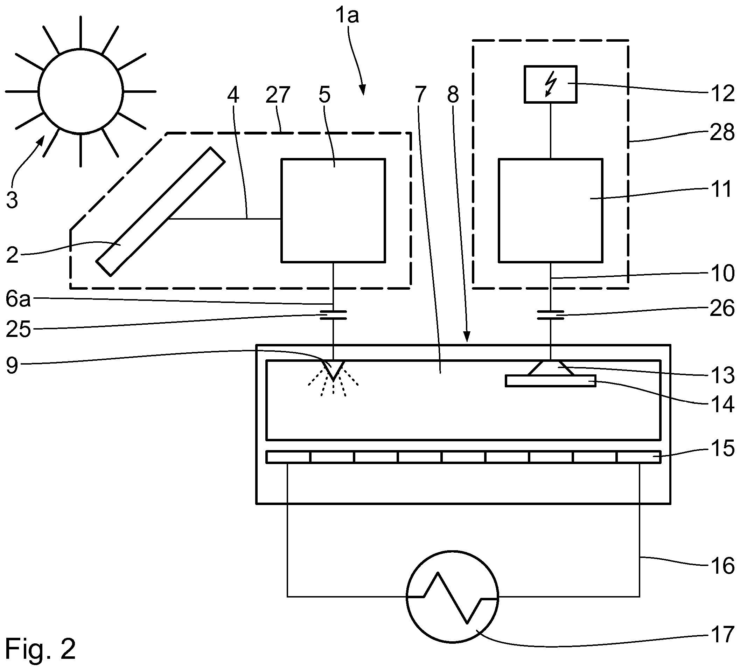

Im Folgenden wird unter Bezugnahme auf die Fig. 2 ein weiteres Ausführungsbeispiel der Erfindung beschrieben. Konstruktiv identische Teile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber der Ausführungsform gemäß Fig. 1 besteht darin, dass die Anlage 1a als mobile Einheit in Form einer Batterie ausgeführt ist. Um den mobilen Einsatz der Anlage 1a zu ermöglichen, sind die externen Speichereinheiten 18, 21 nicht vorgesehen. Entsprechend ist der Reaktionsbehälter 7 standardmäßig und dauerhaft mit Trägermedium, insbesondere LOHC, gefüllt. Wenn das in dem Reaktionsbehälter 7 vorhandene Trägermedium zumindest anteilig oder vollständig entladen ist, ist die Batterie gemäß der mobilen Anlage 1a zumindest anteilig oder vollständig entladen. Wenn das in dem Reaktionsbehälter 7 vorhandene Trägermedium zumindest anteilig oder vollständig beladen ist, ist die Anlage 1a zumindest anteilig oder vollständig beladen. Um den mobilen Einsatz der Anlage 1a zu gewährleisten, ist der Wärmetauscher 15 in die Belade-/Entlade-Einheit 8 integriert. Insbesondere ist die Rohrleitung 6a derart ausgeführt, dass eine definierte Trennung von dem Reaktionsbehälter 7 möglich ist. Entsprechend ist an dem Reaktionsbehälter 7 eine Rohrleitungskopplung 25 vorgesehen, die als Flanschkopplung ausgeführt ist. Die Rohrleitungskopplung 25 stellt eine Schnittstelle dar, um eine flexible Wasserstoff-Zufuhr in den Reaktionsbehälter 7 zu gewährleisten. Es ist dadurch möglich, eine mobile Einheit zur Strom-/Wasserstofferzeugung, insbesondere mit einer Stromerzeugungs-Einheit 2 und einer Wasserstofferzeugungs-Einheit 5, mit dem Reaktionsbehälter 7 zu koppeln.

An dem Reaktionsbehälter 7 ist eine weitere Rohrleitungskopplung 26 vorgesehen, die im Wesentlichen identisch ausgeführt ist zu der Rohrleitungskopplung 25. Mit der Rohrleitungskopplung 26 ist es möglich, die Rohrleitung 10 zum Abführen vom Wasserstoff aus dem Reaktionsbehälter 7 in die Wasserstoffverwertungseinheit 11 zu ermöglichen. Über die Rohrleitungskopplung 25 ist es möglich, beispielsweise eine mobile Wasserstoff-Verstromungseinheit in Form einer Brennstoffzelle an ein öffentliches Stromleitungsnetz 12 und/oder an einen oder mehrere elektrische Verbraucher anzuschließen. Insbesondere kann die Belade-/Entlade-Einheit 8 als mobile Einheit ausgeführt sein und mit einer Strom-/Wasserstofferzeugungs-Einheit 27 und/oder mit einer Stromverwertungseinheit 28 lokal und/oder zeitlich unabhängig kombiniert werden. Es ist insbesondere denkbar, dass in Abhängigkeit des Einsatzortes und des Einsatzzeitpunktes nur eine Strom-/Wasserstofferzeugungseinheit 27 oder die Wasserstoffverwertungseinheit 28 an die Belade-/Entlade-Einheit 8 angeschlossen sind.

## Patentansprüche

1. Belade-/Entlade-Einheit (8) für Wasserstoff, die einen Reaktionsbehälter (7) aufweist, in dem ein Beladen eines Trägermediums mit Wasserstoff und ein Entladen des Wasserstoffs vom beladenen Trägermedium erfolgt, **dadurch gekennzeichnet, dass** ein Belade-/Entlade-Katalysator zum Katalysieren des Beladens des Trägermediums mit Wasserstoff und zum Katalysieren des Entladens des Wasserstoffs vom beladenen Trägermedium vorgesehen ist, der mindestens einen katalytisch aktiven Feststoff oder eine Mischung katalytisch aktiver Feststoffe aufweist.

2. Belade-/Entlade-Einheit (8) gemäß Anspruch 1, **dadurch gekennzeichnet, dass** die Belade-/Entlade-Einheit (8) temperierbar, insbesondere heizbar und kühlbar, ausgeführt ist.

3. Belade-/Entlade-Einheit (8) gemäß Anspruch 2, **gekennzeichnet durch** einen Wärmetauscher (15) zum Übertragen von Wärme zwischen dem Reaktionsbehälter (7) und einem Wärmeträgermedium.

4. Belade-/Entlade-Einheit (8) gemäß einem der vorstehenden Ansprüche, **dadurch gekennzeichnet, dass** der Belade-/Entlade-Katalysator in dem Reaktionsbehälter (7) angeordnet ist.

5. Anlage zum Speichern von Energie umfassend eine Belade-/Entlade-Einheit (8) gemäß einem der vorstehenden Ansprüche.

6. Anlage gemäß Anspruch 5, **gekennzeichnet durch** eine erste Trägermedium-Zuführleitung (19) zum Zuführen des entladenen Trägermediums zu der Belade-/Entlade-Einheit (8) und/oder eine erste Trägermedium-Abführleitung (20) zum Abführen des entladenen Trägermediums aus der Belade-/Entlade-Einheit (8).

7. Anlage gemäß Anspruch 5 oder 6, **gekennzeichnet durch** eine, insbesondere über eine erste Trägermedium-Zuführleitung (19) und/oder über eine erste Trägermedium-Abführleitung (20) verbundene, erste Trägermedium-Speichereinheit (18) zum Speichern des entladenen Trägermediums.

8. Anlage gemäß einem der Ansprüche 6 bis 7, **gekennzeichnet durch** eine zweite Trägermedium-Zuführleitung (22) zum Zuführen des beladenen Trägermediums zu der Belade-/Entlade-Einheit (8) und/oder eine zweite Trägermedium-Abführleitung (23) zum Abführen des beladenen Trägermediums aus der Belade-/Entlade-Einheit (8).

9. Anlage gemäß einem der Ansprüche 5 bis 8, **gekennzeichnet durch** eine, insbesondere über eine zweite Trägermedium-Zuführleitung (22) und/oder über eine zweite Trägermedium-Abführleitung (23) verbundene, zweite Trägermedium-Speichereinheit (21) zum Speichern des beladenen Trägermediums.

10. Anlage gemäß einem der Ansprüche 5 bis 9, **gekennzeichnet durch** eine mit der Belade-/Entlade-Einheit (8) verbindbare Wasserstofferzeugungs-Einheit (5) zum Erzeugen von Wasserstoff.

11. Anlage gemäß einem der Ansprüche 5 bis 10, **gekennzeichnet durch** eine mit der Belade-/Entlade-Einheit (8) verbindbare Wasserstoffverwertungs-Einheit (11) zum Verwerten von Wasserstoff.

12. Verfahren zum Speichern von Energie umfassend die Verfahrensschritte
- Bereitstellen einer Belade-/Entlade-Einheit (8) gemäß einem der Ansprüche 1 bis 4,
- Beladen von Trägermedium mit Wasserstoff durch eine katalytische Hydrierreaktion in dem Reaktionsbehälter (7),
- Entladen des Wasserstoffs vom beladenen Trägermedium durch eine katalytische Dehydrierreaktion in dem Reaktionsbehälter (7).

13. Verfahren gemäß Anspruch 12, **gekennzeichnet durch** Regenerieren eines Belade-/Entlade-Katalysators während des Beladens von Trägermedium mit Wasserstoff.

14. Verfahren gemäß Anspruch 12 oder 13, **gekennzeichnet durch** Nutzen von Restwärme eines jeweils vorherigen Verfahrensschrittes beim Beladen.

15. Verfahren gemäß einem der Ansprüche 12 bis 14, **gekennzeichnet durch** ein Schnellabschalten des Reaktionsbehälters (7) während des Entladens des Wasserstoffs vom beladenen Trägermedium durch Zuleiten von unbeladenem, insbesondere kaltem, Trägermedium über eine erste Trägermedium-Zuführleitung (19).

## Claims

1. A loading/unloading unit (8) for hydrogen, which has a reaction vessel (7) in which loading of a carrier medium with hydrogen and unloading of the hydrogen from the loaded carrier medium occur, **characterized in that** a loading/unloading catalyst for catalyzing loading of the carrier medium with hydrogen and for catalyzing unloading of the hydrogen from the loaded carrier medium is provided which has at least one catalytically active solid or a mixture of catalytically active solids.

2. The loading/unloading unit (8) as claimed in claim 1, **characterized in that** the loading/unloading unit (8) is configured so that its temperature can be controlled, in particular so that it is heatable and coolable.

3. The loading/unloading unit (8) as claimed in claim 2, **characterized by** a heat exchanger (15) for transferring heat between the reaction vessel (7) and a heat transfer medium.

4. The loading/unloading unit (8) as claimed in any of the preceding claims, **characterized in that** the loading/unloading catalyst is arranged in the reaction vessel (7).

5. A plant for storing energy, which comprises a loading/unloading unit (8) as claimed in any of the preceding claims.

6. The plant as claimed in claim 5, **characterized by** a first carrier medium feed conduit (19) for feeding the unloaded carrier medium into the loading/unloading unit (8) and/or a first carrier medium discharge conduit (20) for discharging the unloaded carrier medium from the loading/unloading unit (8).

7. The plant as claimed in claim 5 or 6, **characterized by** a first carrier medium storage unit (18), in particular a first carrier medium storage unit (18) connected via a first carrier medium feed conduit (19) and/or via a first carrier medium discharge conduit (20), for storing the unloaded carrier medium.

8. The plant as claimed in any of claims 6 to 7, **characterized by** a second carrier medium feed conduit (22) for feeding the loaded carrier medium into the loading/unloading unit (8) and/or a second carrier medium discharge conduit (23) for discharging the loaded carrier medium from the loading/unloading unit (8).

9. The plant as claimed in any of claims 5 to 8, **characterized by** a second carrier medium storage unit (21), in particular a second carrier medium storage unit (21) connected via a second carrier medium feed conduit (22) and/or via a second carrier medium discharge conduit (23), for storing the loaded carrier medium.

10. The plant as claimed in any of claims 5 to 9, **characterized by** a hydrogen production unit (5) which can be connected to the loading/unloading unit (8) for producing hydrogen.

11. The plant as claimed in any of claims 5 to 10, **characterized by** a hydrogen utilization unit (11) which can be connected to the loading/unloading unit (8) for utilizing hydrogen.

12. A process for storing energy, which comprises the process steps
- provision of a loading/unloading unit (8) as claimed in any of claims 1 to 4,
- loading of carrier medium with hydrogen by means of a catalytic hydrogenation reaction in the reaction vessel (7),
- unloading of the hydrogen from the loaded carrier medium by means of a catalytic dehydrogenation reaction in the reaction vessel (7).

13. The process as claimed in claim 12, **characterized by** regeneration of a loading/unloading catalyst during loading of carrier medium with hydrogen.

14. The process as claimed in claim 12 or 13, **characterized by** use of residual heat from a previous process step in the loading.

15. The process as claimed in any of claims 12 to 14, **characterized by** rapid shutdown of the reaction vessel (7) during unloading the hydrogen from the loaded carrier medium by means of introducing unloaded, preferably cold carrier medium via a first carrier medium feed conduit (19).

## Revendications

1. Unité de charge/décharge (8) pour de l'hydrogène, qui présente un contenant de réaction (7), dans lequel une charge d'un milieu porteur en hydrogène et une décharge de l'hydrogène du milieu porteur chargé ont lieu, **caractérisée en ce qu'**un catalyseur de charge/décharge est prévu pour catalyser la charge du milieu porteur en hydrogène et pour catalyser la décharge de l'hydrogène du milieu porteur chargé, qui présente au moins un solide actif catalytiquement ou un mélange de solides actifs catalytiquement.

2. Unité de charge/décharge (8) selon la revendication 1, **caractérisée en ce que** l'unité de charge/décharge (8) est réalisée de manière à pouvoir être thermorégulée, en particulier de manière à pouvoir être chauffée et refroidie.

3. Unité de charge/décharge (8) selon la revendication 2, **caractérisée par** un échangeur de chaleur (15) pour transférer de la chaleur entre le contenant de réaction (7) et un milieu caloporteur.

4. Unité de charge/décharge (8) selon l'une quelconque des revendications précédentes, **caractérisée en ce que** le catalyseur de charge/décharge est disposé dans le contenant de réaction (7).

5. Installation de stockage d'énergie comprenant une unité de charge/décharge (8) selon l'une quelconque des revendications précédentes.

6. Installation selon la revendication 5, **caractérisée par** un premier conduit d'amenée de milieu porteur (19) pour amener le milieu porteur déchargé à l'unité de charge/décharge (8) et/ou un premier conduit d'évacuation de milieu porteur (20) pour évacuer le milieu porteur déchargé hors de l'unité de charge/décharge (8).

7. Installation selon la revendication 5 ou 6, **caractérisée par** une première unité de stockage de milieu porteur (18) reliée en particulier par l'intermédiaire d'un premier conduit d'amenée de milieu porteur (19) et/ou par l'intermédiaire d'un premier conduit d'évacuation de milieu porteur (20), pour stocker le milieu porteur déchargé.

8. Installation selon l'une quelconque des revendications 6 à 7, **caractérisée par** un deuxième conduit d'amenée de milieu porteur (22) pour amener le milieu porteur chargé à l'unité de charge/décharge (8) et/ou un deuxième conduit d'évacuation de milieu porteur (23) pour évacuer le milieu porteur chargé hors de l'unité de charge/décharge (8).

9. Installation selon l'une quelconque des revendications 5 à 8, **caractérisée par** une deuxième unité de stockage de milieu porteur (21) reliée en particulier par l'intermédiaire d'un deuxième conduit d'amenée de milieu porteur (22) et/ou par l'intermédiaire d'un deuxième conduit d'évacuation de milieu porteur (23), pour stocker le milieu porteur chargé.

10. Installation selon l'une quelconque des revendications 5 à 9, **caractérisée par** une unité de production d'hydrogène (5) pouvant être reliée à l'unité de charge/décharge (8), pour générer de l'hydrogène.

11. Installation selon l'une quelconque des revendications 5 à 10, **caractérisée par** une unité de valorisation d'hydrogène (11) pouvant être reliée à l'unité de charge/décharge (8), pour valoriser de l'hydrogène.

12. Procédé de stockage d'énergie comprenant les étapes de procédé
- de fourniture d'une unité de charge/décharge (8) selon l'une quelconque des revendications 1 à 4,
- de charge de milieu porteur en hydrogène par une réaction d'hydrogénation catalytique dans le contenant de réaction (7),
- de décharge de l'hydrogène du milieu porteur chargé par une réaction de déshydrogénation catalytique dans le contenant de réaction (7).

13. Procédé selon la revendication 12, **caractérisé par** la régénération d'un catalyseur de charge/décharge au cours de la charge du milieu porteur en hydrogène.

14. Procédé selon la revendication 12 ou 13, **caractérisé par** l'utilisation de la chaleur résiduelle d'une étape de procédé respectivement précédente lors de la charge.

15. Procédé selon l'une quelconque des revendications 12 à 14, **caractérisé par** une désactivation rapide du contenant de réaction (7) pendant la décharge de l'hydrogène du milieu porteur chargé par l'acheminement de milieu porteur non chargé, en particulier froid, par l'intermédiaire d'un premier conduit d'amenée de milieu porteur (19).
